# EUROPEAN PATENT SPECIFICATION

(11) **EP 4 270 571 B1**
(45) Date of publication and mention of the grant of the patent: **14.01.2026**
(21) Application number: 22898933.1
(22) Date of filing: 15.11.2022
(51) Int. Cl.: H01M 10/04, H01M 10/058

(54) **MANUFACTURING METHOD OF CURVED SECONDARY BATTERY**
HERSTELLUNGSVERFAHREN FÜR GEKRÜMMTE SEKUNDÄRBATTERIE
PROCÉDÉ DE FABRICATION D'UNE BATTERIE SECONDAIRE INCURVÉE

(30) Priority: 23.11.2021 KR 20210162144
(43) Date of publication of application: 01.11.2023
(73) Proprietor: LG Energy Solution, Ltd., Seoul 07335 (KR)
(72) Inventor: SONG, Dong Hun, Daejeon 34122 (KR); KIM, Minjung, Daejeon 34122 (KR); CHOI, Hayelin, Daejeon 34122 (KR); LEE, Wooyong, Daejeon 34122 (KR)
(74) Representative: Plasseraud IP
(86) International application number: PCT/KR2022/018024
(87) International publication number: WO 2023/096251

(56) References cited:
- CN-B- 109 411 643
- KR-A- 20150 050 319
- KR-B1- 101 382 554
- KR-B1- 102 191 183
- US-A1- 2015 113 796
- US-A1- 2018 226 673
- US-A1- 2021 043 977

## Description

### [TECHNICAL FIELD]

The present disclosure relates to a manufacturing method of a curved secondary battery.

### [BACKGROUND]

With the technology development and increased demand for mobile devices, demand for secondary batteries as energy sources has been rapidly increasing. Among such secondary batteries is a lithium secondary battery exhibiting a high energy density and operating voltage, a long cycle lifespan, and a low self-discharge rate, which is now commercialized and widely used.

Representatively, from the aspect of the shape of batteries, there is a high demand for prismatic secondary batteries and pouch-type secondary batteries, which are thin and thus can be applied to products such as, for example, portable phones. In addition, from the aspect of materials, there is a high demand for lithium secondary batteries such as, for example, lithium-ion batteries and lithium-ion polymer batteries, which have a high energy density, discharge voltage, and output stability.

Such secondary batteries tend to be gradually miniaturized and thinned in electronic devices according to the taste of consumers. Thus, in order to minimize unnecessary space waste, the shape of the battery also requires miniaturization and thinning. Therefore, it is necessary to realize various shapes of the secondary battery corresponding to the shape of the device and, at the same time, efficiently utilize the internal space of the device.

Particularly, in recent years, designs themselves of the device have played a very important role in product selection by consumers. For this reason, various types of designs are provided in place of a flat type design that take productivity or the like into consideration. For example, devices such as mobile phones, laptop computers and the like can be designed to have a predetermined curved surface for ergonomic design purpose.

In this manner, many designs having curved surfaces on the outer surface have been developed and put into practical use. In line with this, a curved secondary battery having a curved surface is being actively developed.

At this time, in order to form a curved surface on the secondary battery, techniques have been used in which the shape of the secondary battery is deformed by an external force in a state where the electrode assembly is positioned in a hot press jig or the like with respect to the secondary battery in which the electrode assembly is incorporated into a battery case together with an electrolyte.

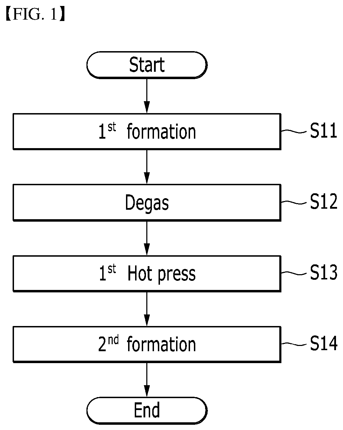

A flowchart of such a process is shown in Fig. 1.

Referring to Fig. 1, a first activation is performed on the secondary battery in which the electrode assembly is incorporated into a battery case together with an electrolyte (S11), and then a degassing step is performed to remove gas generated during the first activation step (S12).

Then, in order to manufacture a curved secondary battery, a hot press step is performed to have a target radius of curvature (S13).

After that, the second activation is performed for capacity check and shipment charging of the secondary battery (S14), the quality inspection is performed, and then shipping is performed.

However, there was a problem that the target radius of curvature value changes during the second activation step due to the spring-back phenomenon immediately after the hot press, and there have been difficulties in realizing the target radius of curvature in the final product after activation such as confirming capacity for shipping, activating shipment charging, and the like.

Therefore, there is an urgent need to develop a technology for a manufacturing method of a curved secondary battery that can solve these problems.

Document US 2015/113796 A1 discloses a method for manufacturing a curved secondary battery. Document US 2018/226673 A1 discloses a method for removing gases from a secondary battery during manufacturing.

### [DETAILED DESCRIPTION OF THE INVENTION]

### [Technical Problem]

It is an object of the present disclosure to provide a manufacturing method of a curved secondary battery that can maintain a radius of curvature almost similar to the target radius of curvature even after capacity confirmation for shipping and activation such as shipping charging.

### [Technical Solution]

To this end, the invention relates to a method for manufacturing a curved secondary battery according to claim 1.
The method after claim 1 may present one or more feature(s) of dependent claims 2 to 10, in any combination allowed by the claims. **[BRIEF DESCRIPTION OF THE DRAWINGS]**
Fig. 1 is a flowchart of a method of manufacturing a curved secondary battery according to the related art;
Fig. 2 is a flowchart of a method of manufacturing a secondary battery having a curved shape according to an embodiment of the present disclosure;
Fig. 3 is a graph showing the radius of curvature after the first hot press according to Example 1 based on Experimental Example 1 of the present disclosure;
Fig. 4 is a graph showing the radius of curvature of the final secondary battery according to Example 1 in Experimental Example 1 of the present disclosure;
Fig. 5 is a graph showing the radius of curvature after first hot press according to Comparative Example 1 in Experimental Example 1 of the present disclosure; and
Fig. 6 is a graph showing the radius of curvature of the final secondary battery according to Comparative Example 1 in Experimental Example 1 of the present disclosure.

### [DETAILED DESCRIPTION OF THE EMBODIMENTS]

The terms and words used in the present specification and claims should not be interpreted as being limited to typical meanings or dictionary definitions, but should be interpreted as having meanings and concepts relevant to the technical scope of the present disclosure based on the rule according to which an inventor can appropriately define the terms and words as terms for describing most appropriately the best method the inventor knows for carrying out the invention. Accordingly, the embodiments described herein and the configurations shown in the drawings are only most preferable embodiments of the present disclosure and do not represent the entire spirit of the present disclosure, so it should be appreciated that there may be various equivalents and modifications that can replace the embodiments and the configurations at the time at which the present application is filed, and the scope of the present invention is not limited to the embodiments described below.

Hereinafter, the present disclosure will be described in detail with reference to the accompanying drawings. The terms or words used in the present specification and claims should not be construed as being limited to typical meanings or dictionary definitions, and the present disclosure should be construed with meanings and concepts that are consistent with the technical idea of the present disclosure based on the principle that the inventors may appropriately define concepts of the terms to appropriately describe their own disclosure in the best way.

Further, the embodiments described herein and the configurations shown in the drawings are only most preferable embodiments of the present disclosure and do not represent the entire spirit of the present disclosure, so it should be appreciated that there may be various equivalents and modifications that can replace the embodiments and the configurations at the time at which the present application is filed.

According to one embodiment of the present disclosure, there is provided a method of manufacturing a curved secondary battery having a target radius of curvature, the method comprising the steps of:
(a) incorporating an electrode assembly including a cathode, an anode, and a separator interposed between the cathode and the anode into a battery case together with an electrolyte to manufacture a secondary battery;
(b) subjecting the secondary battery to a first activation and degassing it;
(c) subjecting the degassed secondary battery to a first hot press so as to have a first radius of curvature;
(d) subjecting the secondary battery passed through the first hot press step to a second activation; and
(e) subjecting the secondary battery passed through the second activation to a second hot press so as to have a second radius of curvature.

In step (a), the electrode assembly is manufactured by stacking a cathode, an anode, and a separator.

Here, the cathode is manufactured by applying a cathode slurry containing a cathode active material, a conductive material, and a binder onto a cathode current collector, followed by drying and rolling.

The cathode current collector is not particularly limited as long as it has high conductivity without causing chemical changes to the corresponding battery. For example, stainless steel, aluminum, nickel, titanium, sintered carbon, and a material formed by surface-treating a surface of aluminum or stainless steel with carbon, nickel, titanium, silver, or the like can be used. In addition, the cathode current collector is generally formed to a thickness of 3 µm to 500 µm, and may have fine irregularities formed on the surface thereof to enhance the bonding strength of the cathode active material. For example, it can be used in various forms such as a film, a sheet, a foil, a net, a porous body, a foaming body, and a non-woven fabric structure.

The cathode active material may include a layered compound such as lithium cobalt oxide (LiCoO₂) or lithium nickel oxide (LiNiO₂) or a compound substituted with one or more transition metals; lithium manganese oxides such as chemical formula Li₁₊ₓMn₂₋ₓO₄ (where, x is 0 ~ 0.33), LiMnO₃, LiMn₂O₃, LiMnO₂; lithium copper oxide (Li₂CuO₂); vanadium oxides such as LiV₃O₈, LiFe₃O₄, V₂O₅, and Cu₂V₂O₇; a Ni-site type lithium nickel oxide represented by chemical formula LiNi₁₋ₓMₓO₂ (where, M = Co, Mn, Al, Cu, Fe, Mg, B or Ga, and x= 0.01 ~ 0.3); lithium manganese composite oxide represented by chemical formula LiMn₂₋ₓMₓO₂ (where, M = Co, Ni, Fe, Cr, Zn or Ta, and x = 0.01 ~ 0.1) or Li₂Mn₃MO₈ (where, M = Fe, Co, Ni, Cu or Zn ); LiMn₂O₄ with a Li portion of chemical formula substituted with an alkaline earth metal ion; a disulfide compound; Fe₂(MoO₄)₃, and the like, but is not limited thereto.

The conductive material is used to impart conductivity to the electrode, and the conductive material can be used without particular limitation as long as it has electronic conductivity without causing chemical changes in the battery to be configured. Specific examples thereof include carbon-based materials such as carbon black, acetylene black, ketjen black, channel black, furnace black, lamp black, thermal black, and carbon fiber; graphite such as natural graphite and artificial graphite; metal powder or metal fibers such as copper, nickel, aluminum and silver; conductive whiskey such as zinc oxide and potassium titanate; conductive metal oxides such as titanium oxide; or a conductive polymer such as a polyphenylene derivative, and any one alone or a mixture of two or more of them can be used. The conductive material may be included in an amount of 1 wt.% to 30 wt.%, specifically 1 wt.% to 10 wt.%, and more specifically 1 wt.% to 5 wt.%, based on the total weight of the positive electrode material.

The binder performs the role of improving adhesion between cathode active material particles and an adhesive force between the cathode active material and the current collector. Specific examples thereof include polyvinylidene fluoride (PVDF), a vinylidene fluoride-co-hexafluoropropylene copolymer (PVDF-co-HFP), polyvinyl alcohol, polyacrylonitrile, carboxymethyl cellulose (CMC), starch, hydroxypropylcellulose, regenerated cellulose, polyvinyl pyrrolidone, polytetrafluoroethylene, polyethylene, polypropylene, an ethylene-propylene-diene monomer (EPDM), a sulfonated EPDM, styrene butadiene rubber (SBR), fluoro rubber, or various copolymers thereof, and any one alone or a mixture of two or more of them can be used. The binder may be included in an amount of 1 wt.% to 30 wt.%, specifically 1 wt.% to 10 wt.%, and more specifically 1 wt.% to 5 wt.%, based on the total weight of the cathode material.

The anode is manufactured by applying an anode slurry containing an anode active material, a conductive material, and a binder onto an anode current collector, followed by drying and rolling.

The anode current collector is not particularly limited as long as it has high conductivity without causing chemical changes to the corresponding battery. For example, copper, stainless steel, aluminum, nickel, titanium, sintered carbon, a material formed by surface-treating a surface of copper or stainless steel with carbon, nickel, titanium, silver, or the like, an aluminum-cadmium alloy, and the like can be used. In addition, the anode current collector is generally formed to a thickness of 5 *µ*m to 500 *µ*m, and similarly to the cathode current collector, the anode current collector may have may have fine irregularities formed on the surface thereof to enhance the bonding strength between the anode active materials. For example, it can be used in various forms such as a film, a sheet, a foil, a net, a porous body, a foaming body, and a non-woven fabric structure.

As the anode active material, a compound capable of reversible intercalation and deintercalation may be used. Specific examples of the anode active material may include a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, Si alloy, Sn alloy, or Al alloy; metal oxides capable of doping and dedoping lithium, such as SiOₓ (0 < x < 2), SnO₂, vanadium oxide, and lithium vanadium oxide; a composite containing the metallic compound and the carbonaceous material, such as Si-C composite or Sn-C composite, and any one alone or a mixture of two or more thereof can be used. In addition, as the anode active material, a metal lithium thin film may be used. Further, the carbonaceous material may be both low-crystalline carbon and highly-crystalline carbon. Soft carbon and hard carbon are typical low-crystalline carbon. Typical examples of the highly-crystalline carbon include amorphous, plate-like, flaky, spherical or fibrous natural graphite or artificial graphite, kish graphite, pyrolytic carbon, mesophase pitch-based carbon fiber, mesocarbon microbeads, high-temperature sintered carbon such as mesophase pitches and petroleum or coal tar pitch derived cokes.

The separator separates the anode and the cathode from each other, and provides a moving passage for lithium ions. The separator can be used without particular limitation as long as it is used as a separator in a typical lithium secondary battery. Particularly, it is preferable that the separator has a low resistance against the ion migration of the electrolyte and has an excellent ability to impregnate the electrolyte. Specifically, the separator may be a porous polymer film, for example, a porous polymer film made of a polyolefin-based polymer such as an ethylene homopolymer, a propylene homopolymer, an ethylene/butene copolymer, an ethylene/hexene copolymer and an ethylene/methacrylate copolymer, or a laminated structure of two or more layers thereof. Further, a typical porous nonwoven fabric, for example, a nonwoven fabric made of a glass fiber having a high melting point, a polyethylene terephthalate fiber or the like may be used. In addition, in order to secure heat resistance or mechanical strength, a coated separator containing a ceramic ingredient or a polymer material may be used, and may be optionally used as a single layer or multilayer structure.

The electrode assembly manufactured in this way is incorporated into a battery case together with the electrolyte and then sealed, thereby manufacturing a curved secondary battery in a flat state without undergoing a molding process.

Examples of the electrolyte used in the present disclosure may include, but are not limited to, an organic liquid electrolyte, an inorganic liquid electrolyte, a solid polymer electrolyte, a gel-type polymer electrolyte, a solid inorganic electrolyte, a melt-type inorganic electrolyte, or the like, which can be used in the production of the lithium secondary battery.

Specifically, the electrolyte may include an organic solvent and a lithium salt.

The organic solvent can be used without any particular limitation as long as it serves as a medium through which ions involved in the electrochemical reaction of the battery may migrate. Specific examples of the organic solvent may include an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbonbased solvent such as benzene or fluorobenzene; a carbonate-based solvent such as dimethyl carbonate (DMC), diethyl carbonate (DEC), methylethylcarbonate (MEC), ethylmethyl carbonate (EMC), ethylene carbonate (EC), or propylene carbonate (PC); an alcohol-based solvent such as ethyl alcohol or isopropyl alcohol; nitriles such as R-CN (wherein R is a linear, branched or cyclic hydrocarbon group having 2 to 20 carbon atoms and may include a double bond aromatic ring or ether bond); amides such as dimethylformamide; dioxolanes such as 1,3-dioxolane; sulfolane; or the like. Among them, the carbonate-based solvent is preferable, and a mixture of a cyclic carbonate (for example, ethylene carbonate, propylene carbonate, or the like) having a high ionic conductivity and a high dielectric constant capable of increasing the charge/discharge performance of the battery, and a linear carbonate-based compound (for example, ethylmethyl carbonate, dimethyl carbonate, diethyl carbonate, or the like) having a low viscosity is more preferable. In this case, when the cyclic carbonate and the chain carbonate are mixed in a volume ratio of about 1: 1 to about 1:9, the performance of the electrolyte may be excellently exhibited.

The lithium salt can be used without any particular limitation as long as it is a compound capable of providing lithium ions used in the lithium secondary battery. Specific examples of the lithium salt may include LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, or LiB(C₂O₄)₂. The concentration of the lithium salt may be used in the range of 0.1M to 2.0M. When the concentration of the lithium salt is included in the above range, the electrolyte has an appropriate conductivity and viscosity, so that excellent electrolyte performance can be exhibited and the lithium ions can effectively migrate.

In order to improve the life characteristics of the battery, suppress the decrease of the battery capacity, improve the discharging capacity of the battery, etc., in addition to the above electrolyte ingredients, the electrolyte may further include, for example, at least one additive such as a haloalkylene carbonate-based compound such as difluoroethylene carbonate; pyridine; triethylphosphite; triethanolamine; cyclic ether; ethylene diamine; n-glyme; hexaphosphoric triamide; nitrobenzene derivatives; sulfur; quinone imine dyes; N-substituted oxazolidinones; N,N-substituted imidazolidine; ethylene glycol dialkyl ether; ammonium salt; pyrrole; 2-methoxy ethanol; or aluminum trichloride. In this case, the additive may be included in an amount of 0.1 wt.% to 5 wt.%, based on the total weight of the electrolyte.

Then, the battery case may be a pouch-type battery case in order to manufacture a curved secondary battery.

The pouch may consist of a three-layer structure of an insulating layer, a metal layer, and an insulating layer, as an example. For example, the metal layer may be formed of aluminum, steel, stainless steel, and the like, and the insulating layer may be formed of modified polypropylene (CPP), polyethylene terephthalate (PET), nylon, and the like, but are not limited thereto.

The secondary battery manufactured in this way is then subjected to a process for shipment, and a hot press step is performed so as to have a curved shape in the middle thereof.

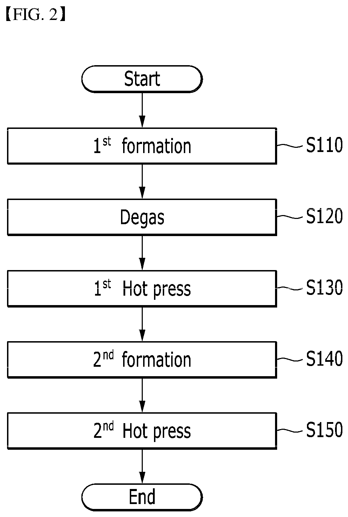

A flowchart of such a process is shown in Fig. 2 below.

Next, a method of manufacturing a curved secondary battery according to the present disclosure will be described in detail with reference to Fig. 2.

First, the manufactured secondary battery is subjected to a first activation (S110).

The first activation step is a step of performing charging and discharging processes to activate internal components of the secondary battery.

In the activation step, charging and discharging may each be performed one or more times, specifically two or more times.

More specifically, the manufactured secondary battery is aged at room temperature for 2 to 5 days, charged at SOC 40% to SOC 65% of the full capacity, aged again at room temperature for 2 to 4 days, fully charged at SOC 100%, and then discharged from SOC 40% to SOC 65%.

Then, a degassing step of discharging the gas generated by the activation step to the outside of the secondary battery is performed (S120).

The degassing step can be performed by unsealing a portion of the sealed secondary battery. After that, it can be resealed again to prevent electrolyte leakage.

And, after that, a first hot press is performed in the same manner as in the related art (S130). The first hot press is a step of applying pressure to the flat type secondary battery so that the flat type secondary battery has a first radius of curvature, thereby having a curved shape.

Here, the radius of curvature is expressed as the radius of a circle having the circumference when the curved shape of the secondary battery occupies a part of the circumference.

In this case, the first radius of curvature is equal to the target radius of curvature.

The target radius of curvature can be appropriately selected according to a device required by such a secondary battery, but is not limited thereto. However, if the radius of curvature of the target is too small, it may cause a problem in the safety of the secondary battery, so that it can be selected within a range that does not cause such problems.

Therefore, the first radius of curvature is also equal to the target radius of curvature.

Such a first hot press can be formed by mounting a flat type secondary battery in a hot press jig so as to have a first radius of curvature and then pressurizing it.

At this time, it can be performed by applying pressure to the secondary battery for 1 to 10 seconds using a hot press jig.

If the secondary battery is pressurized for too short a time outside the above range, it cannot be sufficiently curved so as to have a first radius of curvature, and if the secondary battery is pressurized for too long a time, the stress applied to the secondary battery becomes large, which exerts adverse influence on components or the like, which is not preferable.

The pressure can also be appropriately selected in consideration of the applied stress, the occurrence of wrinkles, or the like while minimizing the influence on the components of the secondary battery. Specifically, a pressure of 16 to 28 kgf/cm², more specifically 18 to 24 kgf/cm² can be applied.

Moreover, the first hot press can apply heat simultaneously with pressurization to facilitate shape deformation. Specifically, it may be performed at 70°C to 90°C, specifically 75°C to 85°C.

If heat is applied at excessively high temperature outside the above range, components may be deformed, which is not preferable. If heat is applied at a lower temperature, a sufficient effect due to the application of heat cannot be obtained, which is not preferable.

Here, the temperature means the temperature of the hot press jig for performing the hot press.

After the first hot press, a second activation step is performed (S140).

Unlike the first activation step, the second activation step may be performed to confirm the substantial discharge capacity of the secondary battery and partially proceed with charging for shipping purpose.

Therefore, the second activation may include first charging, first discharging, and second charging processes.

Specifically, the second activation may perform charging and discharging one or more times, or two or more times, but can be performed until the secondary battery is finally charged because the number of times of charging is one more than the number of times of discharging.

However, at this time, the last charge may be a full charge or a partially charged state. Specifically, for shipping purpose, the last charge may be a state of charge between 20% and 80%, more specifically to a state of charge between 30% and 50%.

Conventionally, it was shipped immediately after that, but according to the present disclosure, the second hot press is performed once again after the second activation (S150).

After the second activation, the radius of curvature of the secondary battery changes more significantly. Therefore, the original target radius of curvature is not satisfied and may be greater than the target radius of curvature, which causes a problem. However, according to the present disclosure, the second hot press is performed once again after the secondary activation, thereby enabling manufacture in a range that further satisfies the target radius of curvature.

At this time, the second hot press is performed so that the secondary battery has a second radius of curvature, and specifically, the second radius of curvature is made 2 to 8% smaller than the target radius of curvature.

Generally, the spring-back phenomenon appears again immediately after performing the hot press. Therefore, in order to finally satisfy the target radius of curvature, the second hot press may be performed so as to have a second radius of curvature that is smaller than the target radius of curvature in consideration of the spring-back phenomenon.

At this time, considering the extent to which the spring-back phenomenon occurs, the second radius of curvature is 2 to 8% smaller than the target radius of curvature, and specifically, it may be as small as 4 to 6%, more specifically as small as about 5%.

If the second radius of curvature is reduced by more than 8% outside the above range, it may be too small than the target radius of curvature, and if the second radius of curvature is reduced to less than 2%, it can be larger than the target radius of curvature, which is not preferable. Therefore, in order to have the range closest to the target radius of curvature after the spring-back phenomenon, the second radius of curvature may be made small so as to satisfy the above range.

Similar to the first hot press, the second hot press may also be formed by mounting a flat type secondary battery in a hot press jig so as to have a second radius of curvature and then pressurizing it.

At this time, since the second hot press should also have a smaller radius of curvature than the first hot press, the curvature of the hot press jig may have a second curvature.

Specifically, the second hot press may be performed by applying pressure to the secondary battery using a jig for 1 to 10 seconds.

If the secondary battery is pressurized for too short a time outside the above range, the secondary battery cannot be sufficiently curved to have a second radius of curvature, and if the secondary battery is pressurized for too long a time, it may exert adverse influence on the secondary battery, which is not preferable.

Similar to the first hot press, the pressure can also be appropriately selected in consideration of the applied stress, the occurrence of wrinkles, or the like while minimizing the influence on the components of the secondary battery. However, it may be performed at a slightly higher pressure to satisfy the second radius of curvature. Specifically, a pressure of 16 to 28 kgf/cm², more specifically 18 to 24 kgf/cm² can be applied.

Moreover, the first hot press can apply heat simultaneously with the pressurization to further facilitate shape deformation, and specifically, it may be performed at 70°C to 90°C, specifically 75°C to 85°C.

If heat is applied at excessively high temperature outside the above range, the components may also be deformed, which is not preferable, and if heat is applied at a lower temperature, a sufficient effect due to the application of heat cannot be obtained, which is not preferable.

Here, the temperature means the temperature of the hot press jig for performing the hot press.

Meanwhile, the method of manufacturing a curved secondary battery of the present disclosure comprises (f) a step of cooling the secondary battery passed through the second hot press step after the second hot press step.

In this cooling step, the curve of the secondary battery can be partially restored to have a target radius of curvature.

That is, since the spring-back phenomenon appears immediately after the second hot press, the second hot press is performed so as to have a second curvature that is smaller than the target radius of curvature, thereby capable of eliminating this problem.

Therefore, when the second hot press is further performed in this way, the secondary battery according to the present disclosure can reach the desired radius of curvature almost equally.

After that, a performance test of the secondary battery for shipping purpose is performed, and shipped, and details thereof are omitted therein.

Below, the present disclosure will be described in more detail below with reference to examples. The following examples are intended to be illustrative and are not intended to limit the scope of the invention in any way.

### <Example 1>

### Manufacture of flat type secondary battery

LiCoO₂ powder with an average particle diameter of 5 *µ*m (manufactured by Umicore), carbon black as a conductive material, and polyvinylidene fluoride as a binder were dispersed at a weight ratio of 96:2:2 in an N-methylpyrrolidone solvent to prepare a cathode active material composition slurry. The cathode active material composition slurry was applied to a thickness of about 166 *µ*m onto an aluminum foil using a doctor blade (gap: 170 mm), heat-treated at 130°C in vacuum for 5 hours, and dried. Then, the aluminum foil applied with the cathode active material composition slurry was rolled with a roll press to manufacture a cathode formed with a cathode active material layer.

Artificial graphite, carbon black as a conductive material, carboxymethylcellulose as a thickening agent, and a styrene-butadiene rubber as a binder were dispersed at a weight ratio of 94:1:2:3 in a water solvent, and then mixed to prepare an anode active material composition slurry. The anode active material composition slurry was applied to a thickness of about 225 *µ*m onto copper foil using a doctor blade (gap: 160 mm), heat-treated in a vacuum oven at 130°C for 5 hours, and dried. Then, the copper foil coated with the anode active material composition slurry was rolled with a roll press to manufacture an anode having an anode active material layer.

The electrode assembly was prepared using polyethylene as the separator, and then sealed by a pouch, and an electrolyte containing 1.2M LiPF₆ in a solvent with EC : PC : PP = 3 : 1 : 6 (weight ratio) and dissolved therein was injected inside the pouch to manufacture a secondary battery.

### First activation and degassing

The secondary battery was pressurized under the conditions of 60°C, constant current (CC) and 0.5 kgf/cm², and charged at 0.2 C up to SOC 1%, pressurized at 0.5kgf/cm², charged at 2.0C up to SOC 17%, pressurized at 5kgf/cm², charged at 2.0C up to SOC 49%, pressurized at 5kgf/cm², charged at 1.5C up to SOC 65%mAh, aged at room temperature for 72 hours, fully charged again under the conditions of room temperature, constant current/constant voltage (CC/CV) (4.4V/0.7C, 0.05C, cut-off), fully discharged under a condition of constant current (CC) (0.7C, 3V, cut-off), then recharged at 0.7C up to SOC 66%, degassed by piercing the gas pocket, and then re-sealed to remove the gas pocket.

### First hot press

The degassed secondary battery was mounted in a hot press jig having a curvature radius of R95mm inside the battery, pressurized at a pressure of 22 kgf/cm² for 3 seconds, and the temperature of the jig was set to 80°C.

### Second activation

The secondary battery where the first hot press has been completed was fully charged under a condition of 25°C, constant current/constant voltage (CC/CV) (4.4V/0.7C, 0.05C cut-off), fully discharged under the conditions of 25°C, constant current (CC) (0.7C, 3V cut-off), and then charged again under the conditions of 0.5C, SOC 50%, constant current (CC).

### Second hot press

The secondary battery on which the secondary activation has been completed was mounted in a hot press jig having a curvature radius of R90mm inside the battery, pressurized at a pressure of 22 kgf/cm² for 5 seconds, and the temperature of the jig was set to 80°C. Then, the secondary battery was cooled at room temperature to complete manufacture of the secondary battery.

### <Comparative Example 1>

A secondary battery was manufactured in the same manner as in Example 1 except for the second hot press step in Example 1.

### <Experimental Example 1>

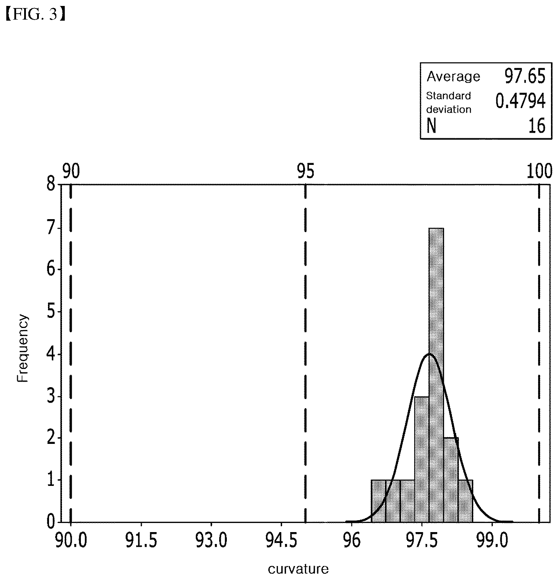

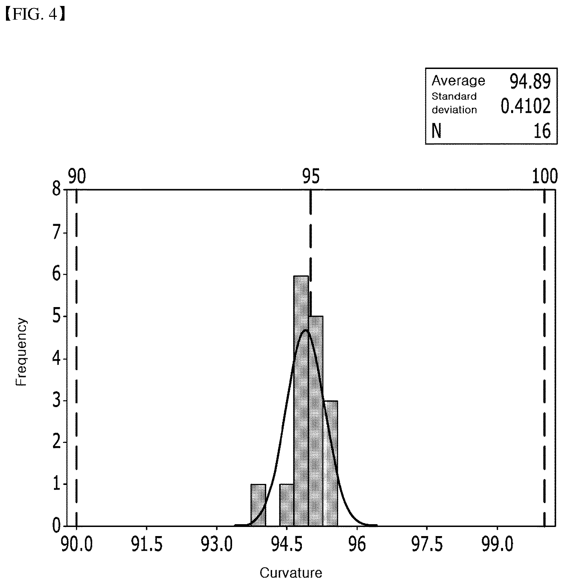

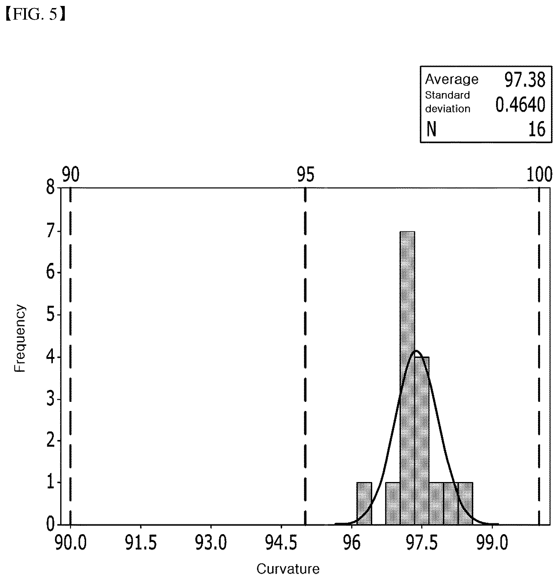

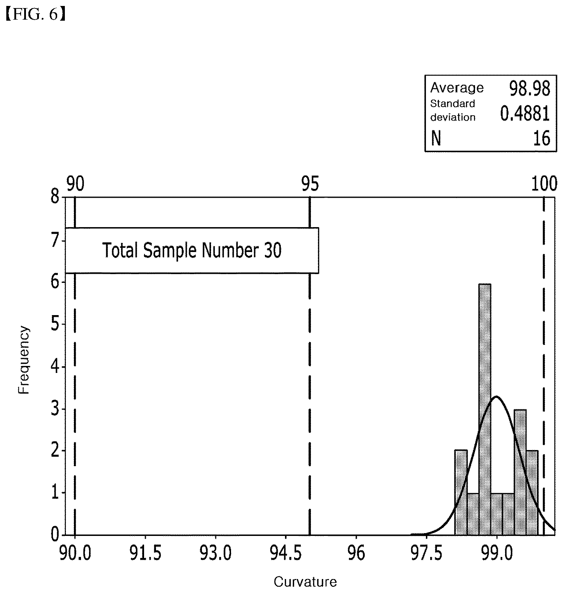

While manufacturing secondary batteries as in Example 1 and Comparative Example 1, after the first hot press step, the degree of curvature of the finally manufactured secondary batteries, that is, the radius of curvature of the secondary batteries was measured, and the results are shown in Figs. 3 to 6 below.

For the measurement of the radius of curvature, the curved surface of the cell was scanned with a 3D scanner, then a circle was drawn based on three points, and the radius of the circle was measured.

Referring to Figs. 3 to 6 below, it has a similar radius of curvature after the first hot press, but in the case of the manufacturing method according to the present disclosure, the finally manufactured secondary battery has almost the same radius of curvature as the target radius of curvature of R95mm, whereas the final secondary battery according to Comparative Example 1 has a curvature radius greater than the target radius of curvature.

### [Industrial Applicability]

In the manufacturing method of the curved secondary battery according to the present disclosure, not only the first hot press is performed after the first activation step, but also a second hot press is further performed after the second activation process for the purpose of capacity confirmation and shipment charging, and during the second hot press, hot press is performed to have a radius of curvature smaller than the target radius of curvature, thereby compensating for the spring-back problem in which the radius of curvature of the secondary battery is changed, which occurs in the second activation step. Thereby, a secondary battery that satisfies the target radius of curvature can be manufactured.

## Claims

1. A method of manufacturing a curved secondary battery having a target radius of curvature, the method comprising the steps of:
(a) incorporating an electrode assembly including a cathode, an anode, and a separator interposed between the cathode and the anode into a battery case together with an electrolyte to manufacture a secondary battery;
(b) subjecting the secondary battery to a first activation and degassing it;
(c) subjecting the degassed secondary battery to a first hot press so as to have a first radius of curvature;
(d) subjecting the secondary battery passed through the first hot press step to a second activation; and
(e) subjecting the secondary battery passed through the second activation to a second hot press so as to have a second radius of curvature,
wherein the first hot press in step (c) is performed such that the first radius of curvature is equal to the target radius of curvature, and
wherein the second hot press in step (e) is performed such that the second radius of curvature is 2 to 8% less than the target radius of curvature.

2. The method of manufacturing a curved secondary battery according to claim 1, wherein:
the first activation of step (b) includes charging and discharging processes.

3. The method of manufacturing a curved secondary battery according to claim 2, wherein:
the charging and discharging are performed twice or more, respectively.

4. The method of manufacturing a curved secondary battery according to claim 1, wherein:
the first hot press in step (c) is performed at 70°C to 90°C.

5. The method of manufacturing a curved secondary battery according to claim 1, wherein:
the first hot press in step (c) is performed by applying pressure to the secondary battery for 1 to 10 seconds using a hot press jig.

6. The method of manufacturing a curved secondary battery according to claim 1, wherein:
the second activation of step (d) includes first charging, first discharging, and second charging processes.

7. The method of manufacturing a curved secondary battery according to claim 1, wherein:
the second hot press in step (e) is performed at 70°C to 90°C.

8. The method of manufacturing a curved secondary battery according to claim 1, wherein:
the second hot press in step (e) is performed by applying pressure to the secondary battery for 1 to 10 seconds using a hot press jig.

9. The method of manufacturing a curved secondary battery according to claim 1, wherein:
the method of manufacturing a curved secondary battery further comprises (f) cooling the secondary battery passed through the second hot press step.

10. The method of manufacturing a curved secondary battery according to claim 9, wherein:
in the cooling step, the curve of the secondary battery is partially restored to have a target radius of curvature.

## Patentansprüche

1. Verfahren eines Herstellens einer gekrümmten Sekundärbatterie, welche einen Zielkrümmungsradius aufweist, wobei das Verfahren die Schritte umfasst, aus:
(a) Aufnehmen einer Elektrodenanordnung, welche eine Kathode, eine Anode und einen Separator umfasst, welcher zwischen die Kathode und die Anode eingefügt ist, zusammen mit einem Elektrolyten in ein Batteriegehäuse, um eine Sekundärbatterie herzustellen;
(b) Aussetzen der Sekundärbatterie einer ersten Aktivierung und Entlüften dieser;
(c) Aussetzen der entlüfteten Sekundärbatterie einer ersten Heißpresse, um einen ersten Krümmungsradius aufzuweisen;
(d) Aussetzen der Sekundärbatterie, welche den ersten Heißpressschritt durchlaufen hat, einer zweiten Aktivierung; und
(e) Aussetzen der Sekundärbatterie, welche die zweite Aktivierung durchlaufen hat, einer zweiten Heißpresse, um einen zweiten Krümmungsradius aufzuweisen,
wobei die erste Heißpresse in Schritt (c) derart durchgeführt wird, dass der erste Krümmungsradius gleich wie der Zielkrümmungsradius ist, und
wobei die zweite Heißpresse in Schritt (e) derart durchgeführt wird, dass der zweite Krümmungsradius 2 bis 8 % weniger als der Zielkrümmungsradius beträgt.

2. Verfahren eines Herstellens einer gekrümmten Sekundärbatterie nach Anspruch 1, wobei:
die erste Aktivierung aus Schritt (b) Lade- und Entladevorgänge umfasst.

3. Verfahren eines Herstellens einer gekrümmten Sekundärbatterie nach Anspruch 2, wobei:
das Laden und Entladen jeweils zweimal oder öfter durchgeführt wird.

4. Verfahren eines Herstellens einer gekrümmten Sekundärbatterie nach Anspruch 1, wobei:
die erste Heißpresse in Schritt (c) bei 70°C bis 90°C durchgeführt wird.

5. Verfahren eines Herstellens einer gekrümmten Sekundärbatterie nach Anspruch 1, wobei:
die erste Heißpresse in Schritt (c) durch Aufbringen eines Drucks auf die Sekundärbatterie für 1 bis 10 Sekunden unter Verwendung einer Heißpressvorrichtung durchgeführt wird.

6. Verfahren eines Herstellens einer gekrümmten Sekundärbatterie nach Anspruch 1, wobei:
die zweite Aktivierung in Schritt (d) erste Ladevorgänge, erste Entladevorgänge und zweite Ladevorgänge umfasst.

7. Verfahren eines Herstellens einer gekrümmten Sekundärbatterie nach Anspruch 1, wobei:
die zweite Heißpresse in Schritt (e) bei 70°C bis 90°C durchgeführt wird.

8. Verfahren eines Herstellens einer gekrümmten Sekundärbatterie nach Anspruch 1, wobei:
die zweite Heißpresse in Schritt (e) durch Aufbringen eines Drucks auf die Sekundärbatterie für 1 bis 10 Sekunden unter Verwendung einer Heißpressvorrichtung durchgeführt wird.

9. Verfahren eines Herstellens einer gekrümmten Sekundärbatterie nach Anspruch 1, wobei:
das Verfahren eines Herstellens einer gekrümmten Sekundärbatterie ferner (f) ein Kühlen der Sekundärbatterie umfasst, welche den zweiten Heißpressschritt durchlaufen hat.

10. Verfahren eines Herstellens einer gekrümmten Sekundärbatterie nach Anspruch 9, wobei:
in dem Kühlschritt, die Krümmung der Sekundärbatterie teilweise wiederhergestellt wird, um einen Zielkrümmungsradius aufzuweisen.

## Revendications

1. Procédé de fabrication d'une batterie secondaire incurvée ayant un rayon de courbure cible, le procédé comprenant les étapes suivantes :
(a) l'incorporation d'un ensemble d'électrodes comportant une cathode, une anode et un séparateur interposé entre la cathode et l'anode dans un boîtier de batterie conjointement avec un électrolyte pour fabriquer une batterie secondaire ;
(b) la soumission de la batterie secondaire à une première activation et le dégazage de celle-ci ;
(c) la soumission de la batterie secondaire dégazée à un premier pressage à chaud de façon à ce qu'elle possède un premier rayon de courbure ;
(d) la soumission de la batterie secondaire qui est passée par la première étape de pressage à chaud à une seconde activation ; et
(e) la soumission de la batterie secondaire qui est passée par la seconde activation à un second pressage à chaud de façon à ce qu'elle possède un second rayon de courbure, dans lequel le premier pressage à chaud à l'étape (c) est réalisé de sorte que le premier rayon de courbure soit égal au rayon de courbure cible, et
dans lequel le second pressage à chaud à l'étape (e) est réalisé de sorte que le second rayon de courbure soit de 2 à 8 % inférieur au rayon de courbure cible.

2. Procédé de fabrication d'une batterie secondaire incurvée selon la revendication 1, dans lequel :
la première activation de l'étape (b) comporte des processus de charge et de décharge.

3. Procédé de fabrication d'une batterie secondaire incurvée selon la revendication 2, dans lequel :
la charge et la décharge sont réalisées deux fois ou plus, respectivement.

4. Procédé de fabrication d'une batterie secondaire incurvée selon la revendication 1, dans lequel :
le premier pressage à chaud à l'étape (c) est réalisé à une température de 70 °C à 90 °C.

5. Procédé de fabrication d'une batterie secondaire incurvée selon la revendication 1, dans lequel :
le premier pressage à chaud à l'étape (c) est réalisé par l'application d'une pression sur la batterie secondaire pendant 1 à 10 secondes à l'aide d'un gabarit de pressage à chaud.

6. Procédé de fabrication d'une batterie secondaire incurvée selon la revendication 1, dans lequel :
la seconde activation de l'étape (d) comporte des processus de première charge, de première décharge et de seconde charge.

7. Procédé de fabrication d'une batterie secondaire incurvée selon la revendication 1, dans lequel :
le second pressage à chaud à l'étape (e) est réalisé à une température de 70 °C à 90 °C.

8. Procédé de fabrication d'une batterie secondaire incurvée selon la revendication 1, dans lequel :
le second pressage à chaud à l'étape (e) est réalisé par l'application d'une pression sur la batterie secondaire pendant 1 à 10 secondes à l'aide d'un gabarit de pressage à chaud.

9. Procédé de fabrication d'une batterie secondaire incurvée selon la revendication 1, dans lequel :
le procédé de fabrication d'une batterie secondaire incurvée comprend en outre (f) le refroidissement de la batterie secondaire qui est passée par la seconde étape de pressage à chaud.

10. Procédé de fabrication d'une batterie secondaire incurvée selon la revendication 9, dans lequel :
à l'étape de refroidissement, la courbure de la batterie secondaire est partiellement restaurée pour qu'elle possède un rayon de courbure cible.
